# EUROPEAN PATENT SPECIFICATION

(11) **EP 3 690 644 B1**
(45) Date of publication and mention of the grant of the patent: **02.08.2023**
(21) Application number: 18877107.5
(22) Date of filing: 09.11.2018
(51) Int. Cl.: G06F 9/451, G06F 16/903, G06N 3/08, G06F 16/901

(54) **ELECTRONIC DEVICE AND OPERATION METHOD THEREFOR**
ELEKTRONISCHE VORRICHTUNG UND BETRIEBSVERFAHREN DAFÜR
DISPOSITIF ÉLECTRONIQUE ET PROCÉDÉ DE FONCTIONNEMENT ASSOCIÉ

(30) Priority: 10.11.2017 KR 20170149793
(43) Date of publication of application: 05.08.2020
(73) Proprietor: Samsung Electronics Co., Ltd., Suwon-si, Gyeonggi-do 16677 (KR)
(72) Inventor: CHO, Eun Ae, Suwon-Si Gyeonggi-do 16677 (KR); HYUN, Dae Eun, Suwon-Si Gyeonggi-do 16677 (KR); KOO, Ja Yoon, Suwon-Si Gyeonggi-do 16677 (KR); KWON, Jae Ook, Suwon-Si Gyeonggi-do 16677 (KR); PARK, Chang Kun, Suwon-Si Gyeonggi-do 16677 (KR)
(74) Representative: Appleyard Lees IP LLP
(86) International application number: PCT/KR2018/013633
(87) International publication number: WO 2019/093819

(56) References cited:
- EP-A2- 2 797 300
- WO-A1-2017/168125
- JP-A- 2011 107 808
- KR-A- 20050 004 812
- KR-A- 20140 127 527
- KR-A- 20160 009 900
- US-A1- 2013 283 260
- US-A1- 2014 267 770
- US-A1- 2014 317 031
- US-B1- 7 979 370

## Description

### TECHNICAL FIELD

Embodiments described herein relate to an electronic device and an operation method therefor, and more particularly, to a method of automatically recognizing and displaying configurations of applications desired by a user.

### BACKGROUND ART

An artificial intelligence (AI) system is a computer system that implements human-level intelligence. Unlike an existing rule-based smart system, the AI system is a system in which a machine performs learning and determination by itself and becomes intelligent. As the use of the AI system is increased, a recognition rate of the AI system may be improved and a user's preference may be understood more accurately. The existing rule-based smart system is gradually being replaced with a deep learning-based AI system.

AI technology includes machine learning (deep learning) and element technologies using machine learning.

The machine learning is an algorithm technology for autonomously classifying and learning characteristics of input data. The element technology is a technology for simulating functions such as the human brain's recognition or determination by using a machine learning algorithm such as deep learning. The element technology includes technical fields such as linguistic understanding, visual understanding, inference or prediction, knowledge representation, and motion control.

Various fields to which Al technology is applied are as follows. Linguistic understanding is technology for recognizing, applying, and processing human language and characters and includes natural language processing, machine translation, dialogue system, query and answer, speech recognition and synthesis, and the like. Visual understanding is technology for recognizing and processing objects like human vision and includes object recognition, object tracking, image retrieval, person recognition, scene understanding, spatial understanding, image enhancement, and the like. Inference or prediction is technology for determining, logically inferring, and predicting information and includes knowledge/probability-based inference, optimization prediction, preference-based planning, recommendation, and the like. Knowledge representation is technology for automatically processing human experience information into knowledge data and includes knowledge construction (data generation and classification), knowledge management (data utilization), and the like. Motion control is technology for controlling autonomous driving of vehicles and movement of robots and includes movement control (navigation, collision avoidance, driving, etc.), operation control (behavior control), and the like.

Patent publication EP 2 797 300 A2 describes an apparatus and a method for transmitting an information in a portable device. Patent publication US 2014/0267770 A1 describes an image-based application launcher. Patent publication US 2014/0317031 A1 describes application recommendation. Patent publication KR 2016 0009900 A describes a method and apparatus for recommending application based on image recognition device of terminal.

### DESCRIPTION OF EMBODIMENTS

### TECHNICAL PROBLEM

Various embodiments described herein provide an electronic device, which provides recommended applications corresponding to an object recognized from an image, thereby more quickly and conveniently providing applications desired by a user, and an operation method therefor.

### SOLUTION TO PROBLEM

Provided is an electronic device, the electronic device as set out in the accompanying claims.

### ADVANTAGEOUS EFFECTS OF DISCLOSURE

An electronic device and an operation method therefor, according to embodiments of the present disclosure, may effectively distribute and perform operations for training and data recognition of a data recognition model. In this manner, data processing may be efficiently performed so as to provide a service matching a user's intention and a user's privacy may be effectively protected.

### BRIEF DESCRIPTION OF DRAWINGS

FIG. 1 is a diagram for describing an electronic device according to an embodiment.
FIG. 2 is a block diagram illustrating a configuration of an electronic device according to an embodiment.
FIG. 3 is a block diagram illustrating a configuration of an electronic device according to another embodiment.
FIG. 4 is a diagram illustrating an example of an image according to an embodiment.
FIGS. 5 and 6 are diagrams for describing a process of performing pre-processing on one or more objects recognized from an image, according to an embodiment.
FIG. 7 is a diagram for describing a process, performed by an electronic device, of determining one or more recommended applications respectively corresponding to one or more objects recognized from an image, according to an embodiment.
FIG. 8 is a diagram for describing a neural network for learning a method of determining a recommended application corresponding to an object, according to an embodiment.
FIGS. 9 and 10 are diagrams for describing a process of selecting an application to be displayed on a display from among a plurality of recommended applications, according to an embodiment.
FIG. 11 is a diagram illustrating an example in which an electronic device according to an embodiment receives a recommended application from an external server and installs the received recommended application.
FIG. 12 is a diagram illustrating an example in which an electronic device according to an embodiment updates a recommended application to reflect text information recognized from an image.
FIG. 13 is a flowchart of a method of operating an electronic device, according to an embodiment.
FIG. 14 is a block diagram illustrating a configuration of a processor according to an embodiment.
FIG. 15 is a block diagram illustrating a configuration of a data trainer according to an embodiment.
FIG. 16 is a block diagram illustrating a configuration of a data recognizer according to an embodiment.
FIG. 17 is a block diagram illustrating a configuration of a server according to an embodiment.
FIG. 18 is a diagram illustrating an example in which an electronic device and a server, according to an embodiment, interwork with each other to train and recognize data.

### BEST MODE

The invention is defined in the appended claims.

According to an embodiment, the processor may be further configured to execute the one or more instructions to: set an arrangement criterion for arranging the one or more recommended applications on the display based on the image; and arrange the one or more recommended applications on the display based on the set arrangement criterion.

According to an embodiment, the learning model may be determined by learning a method of extracting attributes of recommended applications from the one or more objects in response to an input of the one or more objects to the one or more neural networks and determining the one or more recommended applications based on the extracted attributes of the recommended applications.

According to an embodiment, the attributes of the recommended applications may include at least one of a type, a size, a color, and a shape of an application.

According to an embodiment, the processor may be further configured to execute the one or more instructions to perform pre-processing for inputting the recognized one or more objects into the learning model, and the pre-processing may include at least one of a cropping operation and a warping operation.

According to an embodiment, the image may include an image generated by receiving an external input for drawing configurations of applications desired by a user or a photograph obtained by capturing an image including the configurations of the applications desired by the user.

According to an embodiment, the processor may be further configured to execute the one or more instructions to select, from an application database (DB), the one or more recommended applications respectively corresponding to the recognized one or more objects, and the application DB may include a list of applications installed on the electronic device and applications stored in an external server.

According to an embodiment, the processor may be further configured to execute the one or more instructions to: when the selected one or more recommended applications are determined as applications not installed on the electronic device, receive the selected one or more recommended applications from the external server and install the received selected one or more recommended applications; and display the installed one or more recommended applications on the display so that the installed one or more recommended applications operate.

According to an embodiment, the processor may be further configured to execute the one or more instructions to: recognize text information from the one or more objects; update the one or more recommended applications respectively corresponding to the one or more objects to reflect the text information; and display the updated one or more recommended applications on the display.

Provided is a method of operating an electronic device, the method as set out in the accompanying claims.

### MODE OF DISCLOSURE

Hereinafter, embodiments of the present disclosure will be described in detail with reference to the accompanying drawings so that the present disclosure may be easily carried out by those of ordinary skill in the art. However, the present disclosure may be embodied in many different forms. Also, in order to clearly describe the present disclosure, parts having no relation to the description are omitted, and like reference numerals are assigned to like elements throughout the specification.

The terms used herein are general terms currently widely used in the art in consideration of functions described in the present disclosure, but the terms may vary according to the intention of those of ordinary skill in the art, precedents, or new technology in the art. Thus, the terms used herein should be understood not as simple names but based on the meaning of the terms and the overall description of the present disclosure.

The terms used herein are for the purpose of describing particular embodiments and are not intended to limit the scope of the present disclosure. As used herein, the singular forms "a," "an," and "the" are intended to include the plural forms as well, unless the context clearly indicates otherwise. Also, it will be understood that when a region is referred to as being "connected to" or "coupled to" another region, it may be "directly connected or coupled to" the other region or "electrically connected to" the other region. It will be understood that terms such as "comprise", "include", and "have", when used herein, specify the presence of stated elements, but do not preclude the presence or addition of one or more other elements.

The use of the term "the" and a similar definite term in the specification are to be construed to cover both the singular and the plural. Also, operations of all methods described herein may be performed in any suitable order unless otherwise clearly indicated herein. The present disclosure is not limited to the order of the described operations.

The phrases "in some embodiments" or "in an embodiment" appearing in various places in the specification do not necessarily refer to the same embodiments.

Some embodiments of the present disclosure may be represented by functional block configurations and various processing operations. All or part of such functional blocks may be realized by any number of hardware and/or software components configured to perform particular functions. For example, the functional blocks of the present disclosure may be implemented as one or more microprocessors or may be implemented as circuit configurations for certain functions. Also, for example, the functional blocks of the present disclosure may be implemented with various programming or scripting languages. The functional blocks may be implemented by algorithms executed on one or more processors. Also, the present disclosure may employ any conventional techniques for electronic environment configuration, signal processing, and/or data processing. The terms "mechanism," "element," and "configuration" are used in a broad sense and are not limited to mechanical or physical configurations.

Also, the connecting lines or connecting members illustrated in the drawings are intended to represent exemplary functional connections and/or physical or logical connections between elements. It should be noted that many alternative or additional functional connections, physical connections or logical connections may be present in a practical apparatus.

Hereinafter, the present disclosure will be described in detail with reference to the accompanying drawings.

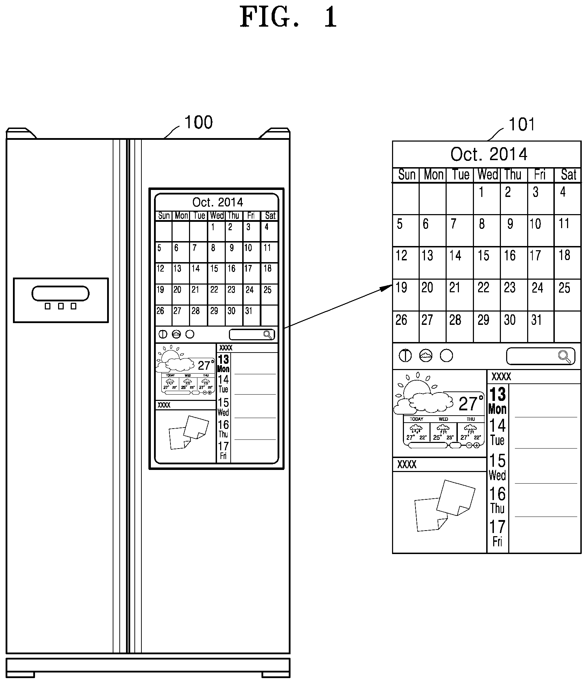

FIG. 1 is a diagram illustrating an example in which an electronic device according to an embodiment displays a plurality of applications on a display.

Referring to FIG. 1, an electronic device 100 may be a home appliance including a display 230, but embodiments are not limited thereto. For example, the electronic device 100 may be implemented as various devices, such as mobile phones, tablet personal computers (PCs), digital cameras, camcorders, laptop computers, desktops, e-book terminals, digital broadcasting terminals, personal digital assistants (PDAs), and portable multimedia players (PMPs), navigations, MP3 players, and wearable devices. Also, the electronic device 100 may be a stationary or mobile electronic device and may be a digital broadcasting receiver capable of receiving digital broadcasting.

The term "user" used in an embodiment of the present disclosure refers to a person who controls the functions or operations of the electronic device 100 and may include a viewer, an administrator, or an installation engineer.

The electronic device 100 according to the embodiment may display one or more applications on the display 230 so that the one or more applications operate. For example, as illustrated in FIG. 1, the electronic device 100 may display a calendar application, a weather application, and a memo pad application on the display 230 and allows a user to use the applications displayed on the display 230 as necessary. In this case, the application may be used as a meaning including a theme indicating a style of an application, a widget, and a user interface, but embodiments are not limited thereto. The user may select desired applications from among a plurality of applications that may be installed and used in the electronic device 100, and the electronic device 100 may display the applications selected by the user on the display 230. Also, the user may change at least one of locations and sizes of one or more applications displayed on the display 230, based on a user's preference.

As the type of the electronic device 100 that allows the user to use the applications by displaying one or more applications on the display 230 increases, there is a need for a method capable of easily recognizing the configurations of the applications desired by the user and providing the applications desired by the user in the form desired by the user, based on a result of the recognizing.

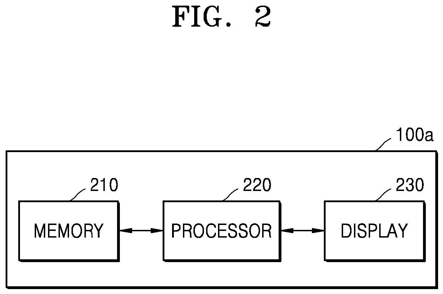

FIG. 2 is a block diagram illustrating a configuration of an electronic device according to an embodiment.

An electronic device 100a illustrated in FIG. 2 may be an embodiment of the electronic device 100 illustrated in FIG. 1. Referring to FIG. 2, the electronic device 100a according to the embodiment may include a memory 210, a processor 220, and a display 230. However, the electronic device 100a may be implemented by more elements than the illustrated elements, and embodiments are not limited to the above-described example.

Hereinafter, the elements of the electronic device 100a will be described in sequence.

The memory 210 according to the embodiment may store programs for processing and control of the processor 220 and may store data input to the electronic device 100a or output from the electronic device 100a.

The memory 210 may include at least one storage medium selected from among flash memory, hard disk, multimedia card micro type memory, card type memory (e.g., SD or XD memory), random access memory (RAM), static random access memory (SRAM), read-only memory (ROM), electrically erasable programmable read-only memory (EEPROM), programmable read-only memory (PROM), magnetic memory, magnetic disk, and optical disk.

The memory 210 according to the embodiment may include a module including one or more instructions for recognizing one or more objects from an image, determining one or more recommended applications respectively corresponding to the one or more objects through a learning model using one or more neural networks, and displaying the determined one or more recommended applications on the display so that the determined one or more recommended applications operate.

The processor 220 may control overall operations of the electronic device 100a. For example, the processor 220 may control the display 230 by executing the one or more instructions stored in the memory 210 and may execute the functions of the electronic device 100a described with reference to FIGS. 1 to 18.

The processor 220 according to the embodiment recognizes objects from an image.

The image is an image showing the configurations of applications desired by the user. The image may include an image generated by receiving an external input for drawing the configurations of the applications desired by the user or a photograph obtained by capturing an image including the configurations of the applications desired by the user, but embodiments are not limited thereto.

The objects recognized from the image respectively correspond to the applications and indicate attributes of the applications desired by the user. For example, the user may desire a memo application in which a line is not displayed on a yellow desktop or a schedule management application capable of checking to-do tasks in 24-hour units, but embodiments are not limited thereto.

The processor 220 according to the embodiment analyzes the image to recognize one or more objects, based on a boundary line for dividing a certain region included in the image, a degree of color change in the image, a shape indicating a certain region included in the image, and the like, but embodiments are not limited thereto.

The processor 220 according to the embodiment determines one or more recommended applications respectively corresponding to one or more objects through a learning model using one or more neural networks.

The neural network may be a set of algorithms for learning a method of recognizing an object from a certain image input to a neural network based on artificial intelligence (AI). For example, the neural network may learn a method of recognizing an object from an image based on supervised learning that uses a certain image as an input value and unsupervised learning that discovers a pattern for recognizing an object from an image by self-learning a type of data necessary for recognizing the object from the image without separate learning. Also, for example, the neural network may learn a method of recognizing an object from an image by using reinforcement learning that uses a feedback on whether a result of recognizing an object according to learning is correct.

The processor 220 uses a learning model using one or more neural networks to determine one or more recommended applications respectively corresponding to one or more objects according to their similarity to the one or more objects. The processor 220 extracts attributes of recommended applications from one or more objects and determine one or more recommended applications based on the extracted attributes of the recommended applications. The attributes of the recommended applications may include at least one of types, sizes, colors, and shapes of the applications. For example, when a first object recognized from an image includes a blue background and an icon indicating today's weather, the processor 220 may extract a weather application, the blue background, and the icon indicating the weather as attributes of the recommended application. The processor 220 determines the recommended application based on the attribute of the recommended application including at least one of the weather application, the blue background, and the icon indicating the weather.

The processor 220 according to the embodiment selects one or more recommended applications corresponding to the first object from an application database (DB). The application DB may include a list of applications installed on the electronic device 100a and applications stored in an external server. The applications stored in the external server may refer to applications not installed on the electronic device 100a, and the electronic device 100a may receive the applications from the external server and install the received applications. For example, the electronic device 100a may receive applications not installed on the electronic device 100a from the external server through an application store and install the received applications, but embodiments are not limited thereto.

The processor 220 according to the embodiment displays one or more recommended applications on the display 230 so that the one or more recommended applications operate.

The processor 220 may set an arrangement criterion for arranging one or more recommended applications on the display 230 based on the image. For example, the processor 220 may determine at least one of the size, location, and transparency of each object from one or more objects recognized from the image. Also, the processor 220 may arrange the recommended application corresponding to each object on the display 230 based on at least one of the size, location, and transparency of each object.

For example, when a first object and a second object are recognized from an image, the first object may be located at the upper end of the image and have a size corresponding to 2/3 of the image, and the second object may be located at the lower end of the image and have a size corresponding to 1/3 of the image. In this case, the processor 220 may set the size and location of the recommended application as an arrangement criterion for arranging recommended applications respectively corresponding to the first object and the second object. Therefore, the processor 220 may arrange the recommended application corresponding to the first object at the upper end of the display 230 in a size corresponding to 2/3 of the size of the display 230, and may arrange the recommended application corresponding to the second object at the lower end of the display 230 in a size corresponding to 1/3 of the size of the display 230.

Also, the processor 220 according to the embodiment may recognize text information from one or more objects recognized from an image. For example, the image may include an October 2017 calendar drawn by the user, and text information indicating an event associated with the user may be written on the calendar. In this case, the processor 220 may recognize the October 2017 calendar as one object and recognize the text information indicating the event from the recognized object. Furthermore, the processor 220 may update the recommended application (e.g., A calendar application) corresponding to the recognized object (e.g., the October 2017 calendar) to reflect the recognized text information. For example, when "birthday" is written in a region corresponding to October 17 in the October 2017 calendar included in the image, the processor 220 may update the A calendar application by adding a birthday event to October 17 of the A calendar application. Also, the processor 220 may display, on the display 230, the updated A calendar application to which the birthday event is added.

Therefore, the processor 220 according to the embodiment may more easily determine the configurations of applications desired by the user and provide recommended applications corresponding to the applications desired by the user in the form desired by the user.

The display 230 according to the embodiment may display one or more recommended applications respectively corresponding to one or more objects recognized from the image. Also, the display 230 may display one or more recommended applications based on attributes of recommended applications extracted from one or more objects. Therefore, the number of recommended applications displayed on the display 230 may be changed according to the number of objects recognized from the image. The sizes and locations of the recommended applications displayed on the display 230 may be changed according to the sizes and locations of the objects recognized from the image.

When the display 230 is implemented as a touch screen, the display 230 may be used as an input device as well as an output device. For example, the display 230 may include at least one of a liquid crystal display (LCD), a thin film transistor-liquid crystal display (TFT-LCD), an organic light-emitting diode (OLED), a flexible display, a three-dimensional (3D) display, and an electrophoretic display. According to embodiments, the electronic device 100a may include two or more displays 230.

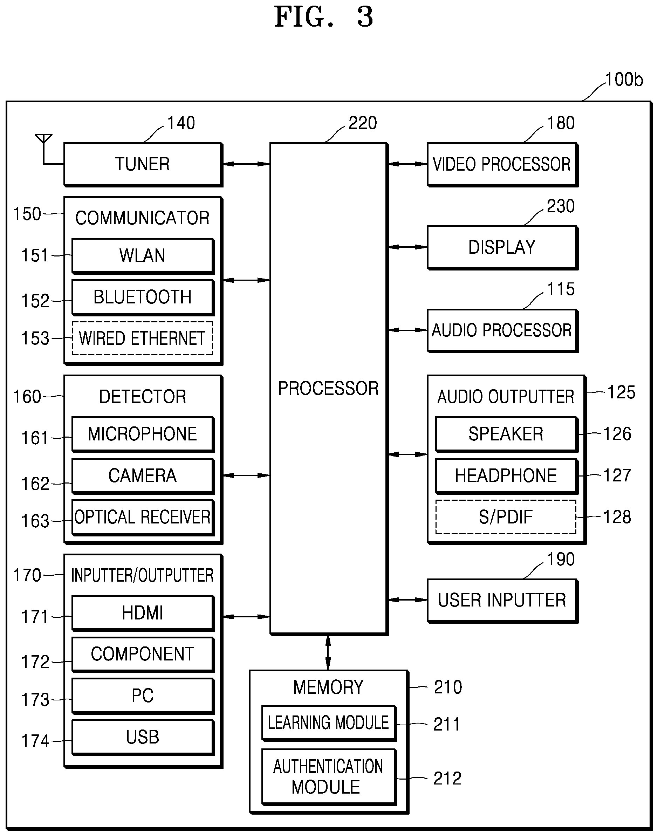

FIG. 3 is a block diagram illustrating a configuration of an electronic device according to another embodiment.

As illustrated in FIG. 3, an electronic device 100b may include a memory 210, a processor 220, and a display 230 and may further include a tuner 140, a communicator 150, a detector 160, an inputter/outputter 170, a video processor 180, an audio processor 115, and user inputter 190.

Because the memory 210, the processor 220, and the display 230 are the same as those described above with reference to FIG. 2, a redundant description thereof will be omitted in FIG. 3.

The tuner 140 may tune only a frequency of a channel to be received by the electronic device 100b among a lot of propagation components by performing amplification, mixing, resonance, or the like on a broadcast signal received in a wire or wireless manner. The broadcast signal may include audio, video, and additional information (e.g., electronic program guide (EPG)).

The broadcast signal received through the tuner 140 may be decoded (e.g., subjected to audio decoding, video decoding, or additional information decoding) and divided into audio, video, and/or additional information. The divided audio, video, and/or additional information may be stored in the memory 210 under the control of the processor 220.

The tuner 140 of the electronic device 100b may be singular or plural. The tuner 140 may be implemented as an all-in-one with the electronic device 100b or may be implemented as a separate device having a tuner electrically connected to the electronic device 100b (e.g., a set-top box (not illustrated) or a tuner (not illustrated) connected to the inputter/outputter 170).

The communicator 150 may connect the electronic device 100b to an external device (e.g., an audio device) under the control of the processor 220. The processor 220 may transmit and receive content to and from the external device connected through the communicator 150, download an application from the external device, or perform web browsing.

The communicator 150 may include one of a wireless local area network (WLAN) 151, Bluetooth 152, and a wired Ethernet 153 according to the performance and configuration of the electronic device 100b. Also, the communicator 150 may include a combination of the WLAN 151, the Bluetooth 152, and the wired Ethernet 153. The communicator 150 may receive a control signal of the controller 101 under the control of the processor 220. The control signal may be implemented in a Bluetooth type, a radio frequency (RF) signal type, or a Wi-Fi type.

The communicator 150 may further include, in addition to the Bluetooth, other short range communications (e.g., near field communication (NFC) (not illustrated) and Bluetooth Low Energy (BLE) (not illustrated)).

The communicator 150 according to the embodiment may receive a learning model using one or more neural networks from an external server. Also, the communicator 150 may receive, from an external device, an image used to recognize one or more objects.

The detector 160 may detect a voice of a user, an image of a user, or an interaction of a user, and may include a microphone 161, a camera 162, and an optical receiver 163.

The microphone 161 may receive a voice uttered by a user. The microphone 161 may convert the received voice into an electrical signal and output the electrical signal to the processor 220.

The camera 162 may receive an image (e.g., successive frames) corresponding to a motion of a user including a gesture in a camera recognition range. For example, the camera 162 may capture an image including configurations of applications desired by the user. For example, the camera 162 may capture a photograph of a picture depicting the configurations of the applications desired by the user and store the captured photograph, and the processor 220 may provide one or more recommended applications respectively corresponding to one or more objects recognized from the photograph captured by the camera 162.

When the electronic device 100b is controlled by a control device, the optical receiver 163 may receive an optical signal (including a control signal) received from the control device. The optical receiver 163 may receive, from the control device, an optical signal corresponding to a user input (e.g., touch, press, touch gesture, voice, or motion). A control signal may be extracted from the received optical signal under the control of the processor 220.

When the electronic device 100b is controlled by the control device, the optical receiver 163 according to the embodiment may receive an external input for drawing an image indicating the configurations of the applications desired by the user.

The inputter/outputter 170 may receive video (e.g., moving image, etc.), audio (e.g., voice, music, etc.), and additional information (e.g., electronic program guide (EPG), etc.) from the outside of the electronic device 100b under the control of the processor 220. The inputter/outputter 170 may include one of a high-definition multimedia interface (HDMI) port 171, a component jack 172, a PC port 173, and a universal serial bus (USB) port 174. The inputter/outputter 170 may include a combination of the HDMI port 171, the component jack 172, the PC port 173, and the USB port 174.

The memory 210 according to the embodiment may store programs for processing and control of the processor 220 and may store data input to the electronic device 100b or output from the electronic device 100b.

The programs stored in the memory 210 may be classified into a plurality of modules according to functions thereof. For example, the programs may be classified into a learning module 211 and the like.

The learning module 211 may include learning modules determined by learning a method of extracting attributes of recommended applications from one or more objects in response to the input of one or more objects to one or more neural networks and a method of determining one or more recommended applications based on the extracted attributes of the recommended applications. The learning model may be received from the external server, and the received learning model may be stored in the learning module 211.

The processor 220 may control overall operations of the electronic device 100b and a signal flow between the internal elements of the electronic device 100b and perform a data processing function. When a user input is received or a stored preset condition is satisfied, the processor 220 may execute an operating system (OS) and various applications stored in the memory 210.

The processor 220 according to the embodiment may execute one or more instructions stored in the memory 210 to recognize one or more objects from an image, determine one or more recommended applications respectively corresponding to the one or more objects through a learning model using one or more neural networks, and display the determined one or more recommended applications on the display so that the determined one or more recommended applications operate.

The video processor 180 may process image data to be displayed by the display 230 and may perform various image processing operations, such as decoding, rendering, scaling, noise filtering, frame rate conversion, and resolution conversion, with respect to image data.

The display 230 may display, on the screen, video included in a broadcast signal received through the tuner 140 under the control of the processor 220. Also, the display 230 may display content (e.g., video) input through the communicator 150 or the inputter/outputter 170. The display 230 may output an image stored in the memory 210 under the control of the processor 220.

The audio processor 115 may process audio data. The audio processor 115 may perform a variety of processing, such as decoding, amplification, or noise filtering, with respect to audio data.

The audio outputter 125 may output audio included in a broadcast signal received through the tuner 140, audio input through the communicator 150 or the inputter/outputter 170, or audio stored in the memory 210 under the control of the processor 220. The audio outputter 125 may include at least one of a speaker 126, a headphone output terminal 127, or a Sony/Phillips digital interface (S/PDIF) output terminal 128.

The user inputter 190 refers to a device that allows a user to input data for controlling the electronic device 100b. For example, the user inputter 190 may include a keypad, a dome switch, a touch pad, a jog wheel, and a jog switch, but embodiments are not limited thereto. Also, the user inputter 190 may be an element of the control device or an element of the electronic device 100b.

The user inputter 190 according to the embodiment may receive an input for drawing the configurations of the applications desired by the user. For example, when the user inputter 190 is implemented as a touchscreen or a touchpad, the user inputter 190 may receive a drawing input using a user's finger or an electronic pen. Also, the user inputter 190 may receive an input of selecting a recommended application to be displayed on the display 230 when a plurality of recommended applications corresponding to objects recognized from an image are determined.

Meanwhile, the block diagrams of the electronic devices 100a and 100b illustrated in FIGS. 2 and 3 are block diagrams for an embodiment. Each element of the block diagram may be integrated, added, or omitted according to the specifications of the electronic devices 100a and 100b that are actually implemented. For example, when necessary, two or more elements may be integrated into one element, or one element may be subdivided into two or more elements. Furthermore, the function performed by each block is provided for describing the embodiments, and a specific operation or device thereof does not limit the scope of the present disclosure.

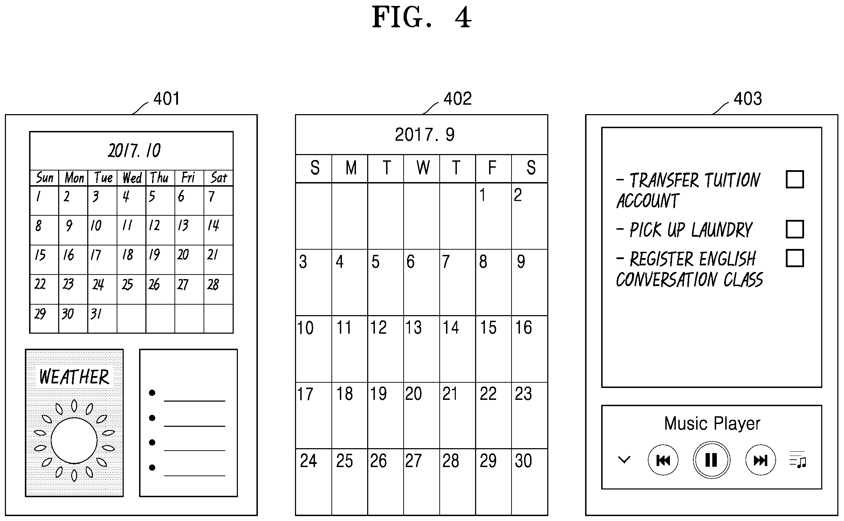

FIG. 4 is a diagram illustrating various examples of an image according to an embodiment.

The electronic device 100 according to the embodiment of the present application recognizes objects from an image. The image is an image indicating configurations of applications desired by the user and may include a picture drawn by a user or a captured photograph, but embodiments are not limited thereto. For example, the electronic device 100 may receive an external input for drawing a picture indicating the configurations of the applications desired by the user through the display 230 implemented as a touchscreen or a touchpad, and may obtain an image by generating a picture corresponding to the received external input. Also, the electronic device 100 may obtain, as an image, a photograph obtained by using the camera 162 to capture the picture indicating the configurations of the applications desired by the user. Also, the electronic device 100 may obtain, as an image, a photograph obtained by using the camera 162 to capture the application displayed on the display of the external device or a screen obtained by using the camera 162 to capture the application displayed on the display of the external device. According to an embodiment, the electronic device 100 may receive the image from the external device. For example, the electronic device 100 may receive an image generated by another device of a user by using wireless communication. Therefore, the electronic device 100 may obtain various types of images and recognize one or more objects from the obtained images.

Referring to FIG. 4, the image may include a photograph 401 obtained by using the camera 162 to capture a picture drawn by a user, an image 402 indicating an application displayed on a display of an external device, and a picture 403 drawn by a user through the display 230 implemented as a touchscreen. For example, the photograph 401 illustrated in FIG. 4 is obtained by capturing the picture drawn by the user, and the photograph 401 may include the configurations of the applications desired by the user.

Also, the user may want to use the same application as an application displayed on another device. At this time, as in the image 402 illustrated in FIG 4, the image used to determine the recommended application may include an image obtained by capturing a screen on which the application desired by the user is displayed, or an image obtained by capturing a photograph of a screen on which the desired application is displayed, but embodiments are not limited thereto.

Also, when the display 230 of the electronic device 100 is implemented as a touchscreen, the electronic device 100 may receive an external input for drawing the configurations of the desired applications through the display 230 implemented as the touchscreen and may generate a picture corresponding to the received external input. For example, as in the image 403 illustrated in FIG. 4, the user may want to display a to-do list displaying application and a music playback application on the display of the electronic device 100. Therefore, the user may draw a picture such as the image 403 illustrated in FIG. 4 by using the display 230 implemented as the touchscreen, and the picture drawn by the user may be stored as one image.

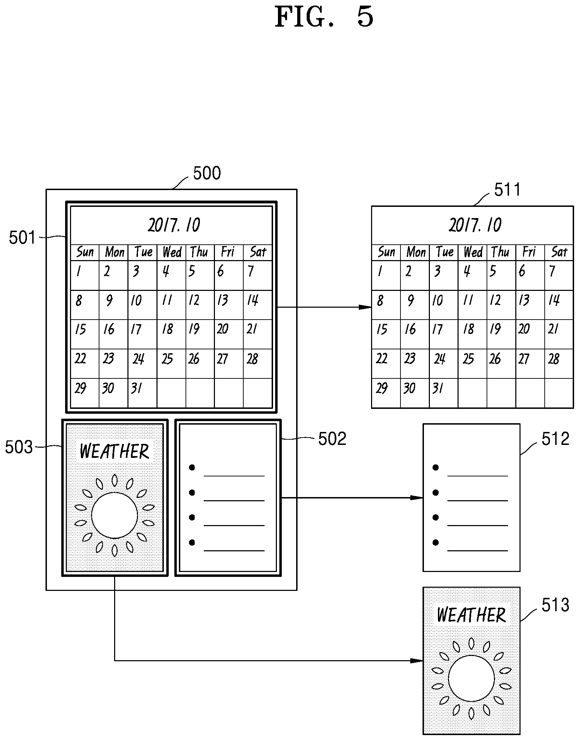

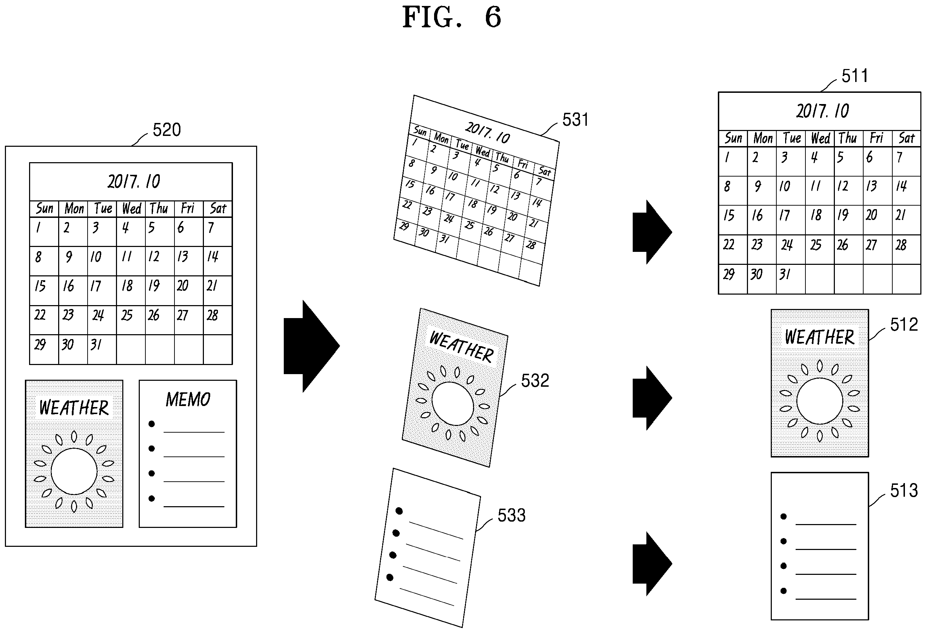

FIGS. 5 and 6 are diagrams for describing a process of performing pre-processing on one or more objects recognized from an image, according to an embodiment.

The electronic device 100 according to the embodiment of the present application recognizes objects from an image and perform pre-processing for inputting the recognized one or more objects to one or more neural networks.

Referring to FIG. 5, an image 500 is an image including configurations of applications desired by a user. The image 500 may be a picture drawn by the user. The image 500 may include a first object 501 indicating a calendar application at the upper end of the image 500, a second object 502 indicating a memo application at the right lower end of the image 500, and a third object 503 indicating a weather application at the left lower end of the image 500.

The electronic device 100 according to the embodiment may determine recommended applications respectively corresponding to first to third objects 501, 502, and 503 recognized from the image through a learning model using one or more neural networks. In this case, the electronic device 100 may perform pre-processing for inputting the first to third objects 501, 502, and 503 to the learning model. Also, the pre-processing may be performed so that the learning model learns a method of extracting attributes of recommended applications from one or more objects and determining one or more recommended applications based on the extracted attributes of the recommended applications. For example, the learning model may be determined by learning a method of extracting attributes of recommended applications from one or more objects in response to the input of the one or more objects to one or more neural networks and determining one or more recommended applications based on the extracted attributes of the recommended applications. In this case, the one or more objects input to the one or more neural networks may be objects on which the pre-processing has been performed.

For example, as illustrated in FIG. 5, the electronic device 100 may perform a cropping operation on the first to third objects 501, 502, and 503 included in the image. The electronic device 100 may determine one or more recommended applications respectively corresponding to the first to third objects 511, 512, and 513 in response to the input of the first to third objects 511, 512, and 513, on which the cropping operation have been performed, to the learning model.

The method of cropping the first to third objects 501, 502, and 503 may be changed according to embodiments. For example, the electronic device 100 may crop the first to third objects 501, 502, and 503 by using at least one of an operation of analyzing a color change in the image 500, an operation of detecting a boundary line indicating a certain region in the image 500, and an operation of extracting a shape of a certain region included in the image 500.

Also, referring to FIG. 6, when an image 520 is a photograph captured by a user, the shapes of one or more objects recognized from the photograph may be changed according to a capturing angle, a capturing environment, and the like. For example, as illustrated in FIG. 6, when the image 520 is a photograph captured in an inclined state, a plurality of objects 531, 532, and 533 recognized from the image 520 may have distorted shapes. In this case, the electronic device 100 may correct the distorted shapes of the objects 531, 532, and 533 by performing a warping operation on the objects 531, 532, and 533 having the distorted shapes. The warping operation may refer to an operation of transforming an image shape according to a certain rule, and various warping algorithms may be used according to embodiments.

The electronic device 100 according to the embodiment may obtain a plurality of shape-corrected objects 541, 542, and 543 by performing the warping operation on the objects 531, 532, and 533 having the distorted shapes. Also, the electronic device 100 may determine one or more recommended applications respectively corresponding to the shape-corrected objects 541, 542, and 543 through a learning model using one or more neural networks.

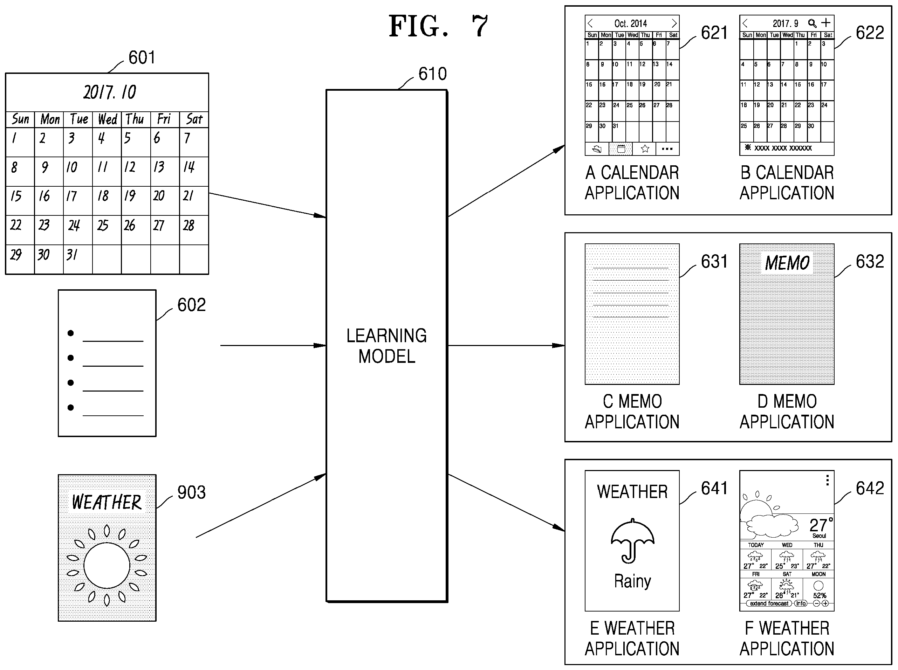

FIG. 7 is a diagram for describing a process, performed by an electronic device, of determining one or more recommended applications respectively corresponding to one or more objects recognized from an image, according to an embodiment.

The electronic device 100 according to the embodiment may determine one or more recommended applications respectively corresponding to one or more objects recognized from the image through a learning model using one or more neural networks. For example, referring to FIG. 7, the electronic device 100 may recognize, from an image, a first object 601 indicating a calendar application, a second object 602 indicating a memo application, and a third object 603 indicating a weather application. The electronic device 100 may determine one or more recommended applications respectively corresponding to first to third objects 601, 602, and 603 through a learning model 610 using one or more neural networks. As described above, pre-processing including at least one of a cropping operation and a warping operation may be performed on the first to third objects 601, 602, and 603 input to the learning model 610.

The electronic device 100 according to the embodiment may determine one or more recommended applications respectively corresponding to the first to third objects 601, 602, and 603 according to their similarity to the first to third objects 601, 602, and 603. The electronic device 100 may extract attributes of the recommended applications from the first to third objects 601, 602, and 603 and may determine one or more recommended applications based on the extracted attributes of the recommended applications.

For example, as illustrated in FIG 7, the electronic device 100 may extract at least one of the type of the application (e.g., a calendar application), the shape of the application (e.g., a grid-type monthly calendar), and the color of the application (e.g., a white background and black letters) as the attribute of the recommended application corresponding to the first object 601. Also, the electronic device 100 may extract the type of the application (e.g., a memo application) and the color of the application (a yellow background) as the attribute of the recommended application corresponding to the second object 602 and may extract the type of the application (e.g., a weather application), the type of the application (a picture indicating today's weather), and the color of the application (e.g., a blue background) as the attribute of the recommended application corresponding to the third object 603.

The electronic device 100 according to the embodiment determines one or more recommended applications based on the extracted attributes of the recommended applications. The electronic device 100 selects one or more recommended applications from an application DB based on the extracted attributes of the recommended applications. As described above, the application DB may include a list of applications installed on the electronic device 100 and applications not installed on the electronic device 100. The electronic device 100 may receive applications not installed on the electronic device 100 from an external server through an application store and install the received applications.

The electronic device 100 according to the embodiment may calculate scores of a plurality of applications selected from the application DB according to the degree of matching with the extracted attributes of the recommended applications. For example, as the degree of matching with the extracted attributes of the recommendation applications is higher, the calculated scores may further increase. The electronic device 100 may preferentially recommend an application having a higher calculated score. Therefore, the electronic device 100 may determine a preset number of applications as a plurality of recommended applications in descending order of scores and may display the recommended applications on the display 230 so as to allow a user to select one of the recommended applications.

For example, the electronic device 100 may determine an A calendar application 621 and a B calendar application 622 as the recommended application corresponding to the first object 601, based on the attributes of the recommended applications extracted from the first object 601 (e.g., a calendar application, a white background and black letters, a grid-shaped monthly calendar, etc.). Also, the electronic device 100 may determine a C memo application 631 and a D memo application 632 as the recommended application corresponding to the second object 602, based on the attributes of the recommended applications extracted from the second object 602 (e.g., a memo application, a yellow background, etc.), and may determine an E weather application 641 and an F weather application 642 as the recommended application corresponding to the third object 603, based on the attributes of the recommended applications extracted from the third object 603 (e.g., a weather application, a picture indicating today's weather, a blue background, etc.).

The electronic device 100 according to the embodiment may display the recommended applications respectively corresponding to the first to third objects 601, 602, and 603 on the display 230 and allows the user to select a desired application from among the recommended applications respectively corresponding to the first to third objects. Therefore, the electronic device 100 may more accurately and easily recommend an application that satisfies conditions desired by the user.

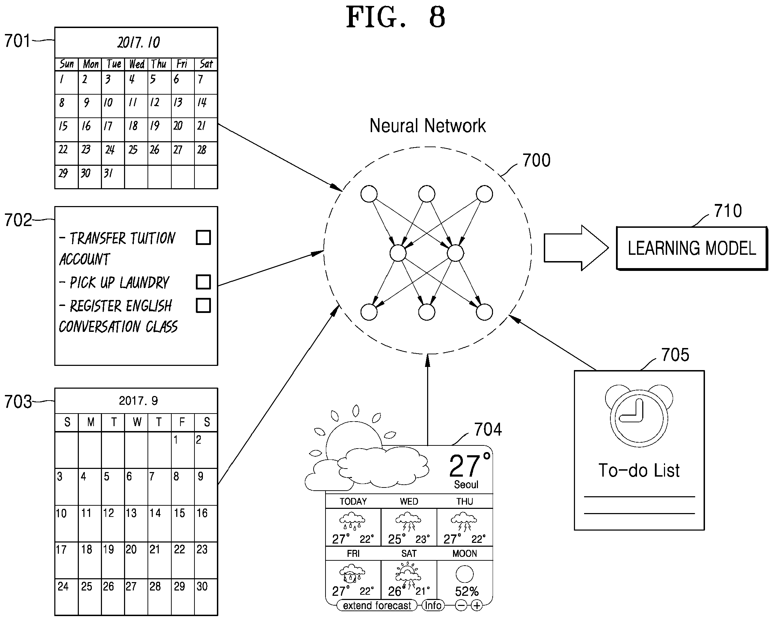

FIG. 8 is a diagram illustrating an example of a neural network that learns a method of determining a recommended application corresponding to an object, according to an embodiment.

Referring to FIG. 8, one or more neural networks 700 may learn a method of determining a recommended application corresponding to a learning object by using a plurality of learning objects 701 to 705 as an input value. The learning objects 701 to 705 may be extracted from an image indicating configurations of applications desired by a user and may be in the form of a picture drawn by the user or a captured photograph. For example, the objects 701 to 705 may be objects extracted from a picture drawn on a paper by the user, such as the first object 701 illustrated in FIG. 8 and may be an object generated by using certain picture editing software, such as the second object 702 and the fifth object 705. Also, the objects 701 to 705 may be objects generated by capturing an application displayed on a display of another device, such as the third object 703, and may be an object generated by receiving a drawing input from the display of the electronic device 100 implemented as a touchscreen, such as the fourth object 704, but embodiments are not limited thereto.

The one or more neural networks 700 may learn a method of extracting the attributes of the recommended applications from the learning objects 701 to 705. For example, the attribute of the recommended application may include at least one of the type, size, color, and shape of the application, and the extracted attribute of the recommendation application may be indicated by a keyword, but embodiments are not limited thereto. Also, the one or more neural networks 700 may learn a method of determining one or more recommended applications based on the extracted attributes of the recommended applications, and a learning model 710 may be generated based on a result of the learning.

According to an embodiment, the operation of learning the method of determining the one or more recommended applications corresponding to the objects by using the one or more neural networks 700 may be performed in advance. Also, as a learning object input to the one or more neural networks 700 is added, the learning model 710 may be updated.

Also, the operation of learning the method of determining the one or more recommended applications corresponding to the objects by using the one or more neural networks 700 may be performed by the electronic device 100 and may be performed by an external server according to embodiments. For example, an operation of learning a method of recognizing an object corresponding to the object by using the one or more neural networks 700 may require a relatively complicated computation amount. Therefore, the external server may perform the learning operation and the electronic device 100 may receive the learning model 710 from the external server, thereby reducing the amount of computation to be performed in the electronic device 100. The electronic device 100 may receive the learning model 710 in advance from the external server, store the received learning model 710 in the memory, and determine one or more recommended applications corresponding to the objects by using the stored learning model 710.

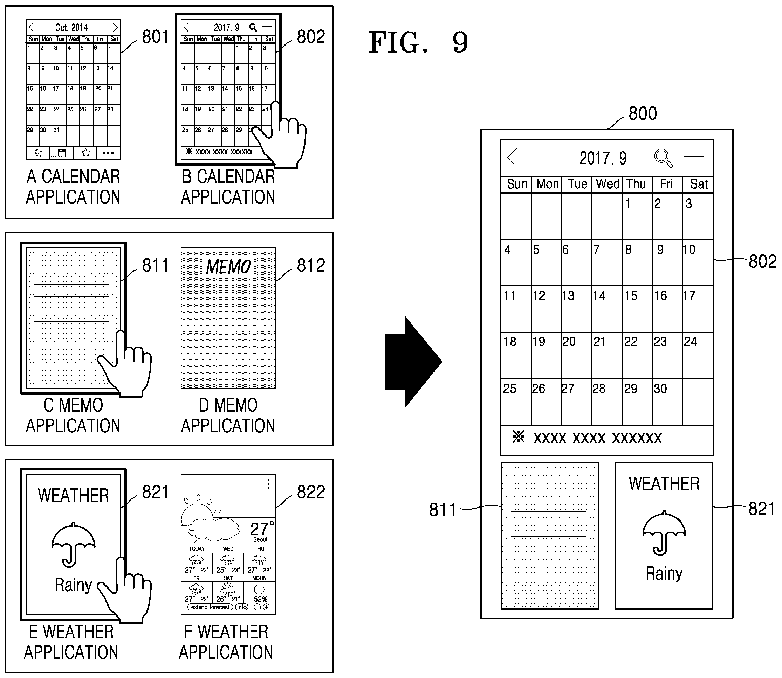

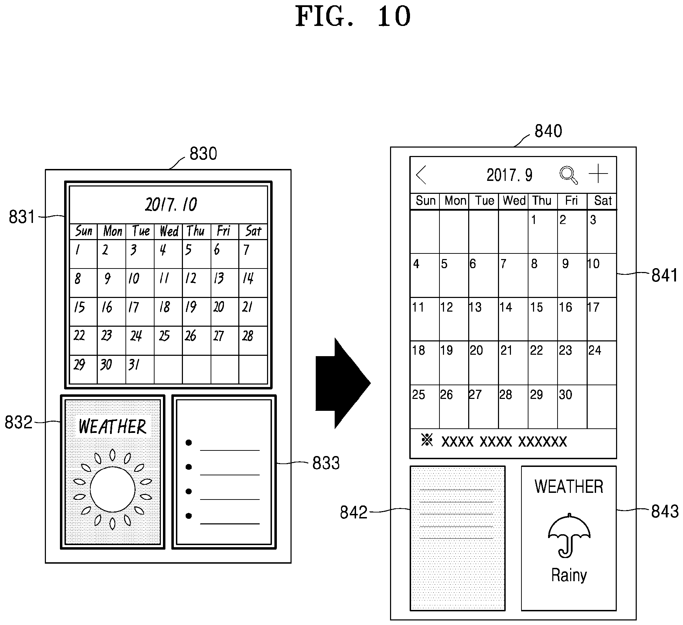

FIGS. 9 and 10 are diagrams for describing a process of selecting an application to be displayed on a display from among a plurality of recommended applications, according to an embodiment.

The electronic device 100 according to the embodiment may determine a plurality of recommended applications respectively corresponding to one or more objects extracted from an image and allow a user to select one recommendation application from among the recommendation applications.

For example, referring to FIG. 8, the electronic device 100 may determine an A calendar application 801 and a B calendar application 802 as the recommended application corresponding to the first object 601, based on the attributes of the recommended applications extracted from the first object 601 recognized from the image (e.g., a calendar application, a white background and black letters, a grid-shaped monthly calendar, etc.). Also, the electronic device 100 may determine a C memo application 811 and a D memo application 812 as the recommended application corresponding to the second object 602, based on the attributes of the recommended applications extracted from the second object 602 (e.g., a memo application, a yellow background, etc.), and may determine an E weather application 821 and an F weather application 822 as the recommended application corresponding to the third object 603, based on the attributes of the recommended applications extracted from the third object 603 (e.g., a weather application, a picture indicating today's weather, a blue background, etc.).

The electronic device 100 according to the embodiment includes the A calendar application 801, the B calendar application 802, the C memo application 811, the D memo application 812, the E weather application 821, and the F weather application 822 on the display 230 and may receive, from the user, an input of selecting some of the displayed recommended applications. For example, as illustrated in FIG 9, when the input of selecting the B calendar application 802, the C memo application 811, and the E weather application 821 is received from the user, the electronic device 100 may display the selected applications on the display 230.

The electronic device 100 according to the embodiment may set an arrangement criterion for arranging a recommended application based on an image when the recommended application selected from among a plurality of recommended applications is displayed on the display 230, and may arrange the selected recommended application on the display 230 based on the set arrangement criterion. For example, referring to FIG. 10, the electronic device 100 may recognize at least one of locations and sizes of a first object 831 indicating a calendar application, a second object 832 indicating a weather application, and a third object 833 indicating a memo application, based on an image 830. Also, the electronic device 100 may set an arrangement criterion for arranging, on the display 230, a B calendar application 841 corresponding to the first object 831, a C memo application 842 corresponding to the third object 833, and an F weather application 843 corresponding to the second object 832. For example, the electronic device 100 may arrange the B calendar application 841 at the upper end in a size corresponding to 2/3 of the size of the display 230, may arrange the C memo application 842 at the left lower end in a size corresponding to 1/3 of the size of the display 230, and may arrange the F weather application 843 at the right lower end in a size corresponding to 1/3 of the size of the display 230. Also, the electronic device 100 may arrange the B calendar application 841, the C memo application 842, and the F weather application 843 on the display 230 according to the set arrangement criterion.

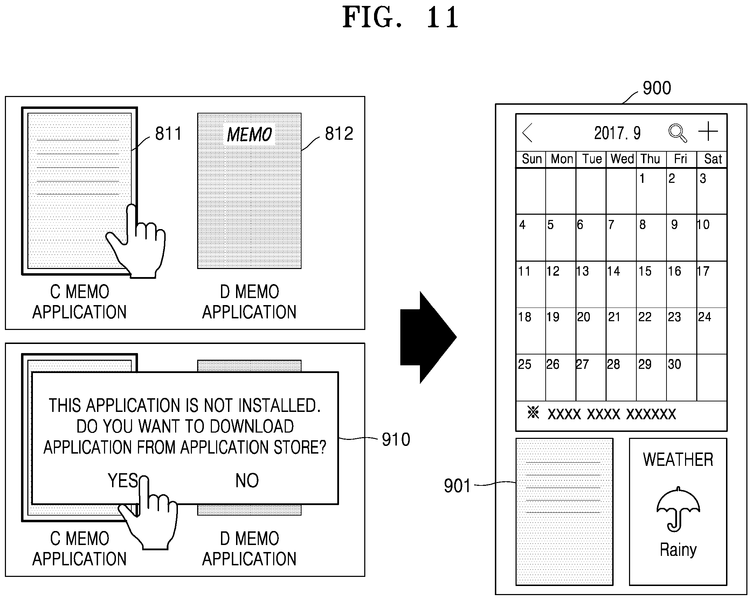

FIG. 11 is a diagram illustrating an example in which an electronic device receives a recommended application from an external server and installs the received recommended application, according to an embodiment.

When an application selected from among a plurality of recommended applications is not installed on the electronic device 100, the electronic device 100 according to the embodiment may receive the selected application from the external server and install the received application.

For example, referring to FIG. 11, the electronic device 100 may determine a C memo application 811 and a D memo application 812 as recommended applications and may receive an input of selecting the C memo application 811 from a user. When the C memo application 811 is an application that is not installed on the electronic device 100, the electronic device 100 ay display a message 910 to select whether to download the C memo application 811 from an application store. When a user input of selecting to download the C memo application 811 is received, the electronic device 100 may access the application store and receive and install the C memo application 811. Also, the electronic device 100 may set an arrangement criterion for arranging the C memo application 811 based on an image and may arrange the C memo application 811 in an area 901 included in a screen 900 of the display 230 based on the set arrangement criterion. Therefore, the electronic device 100 may more conveniently provide a recommended application satisfying a condition desired by a user even when the recommended application is not installed on the electronic device 100.

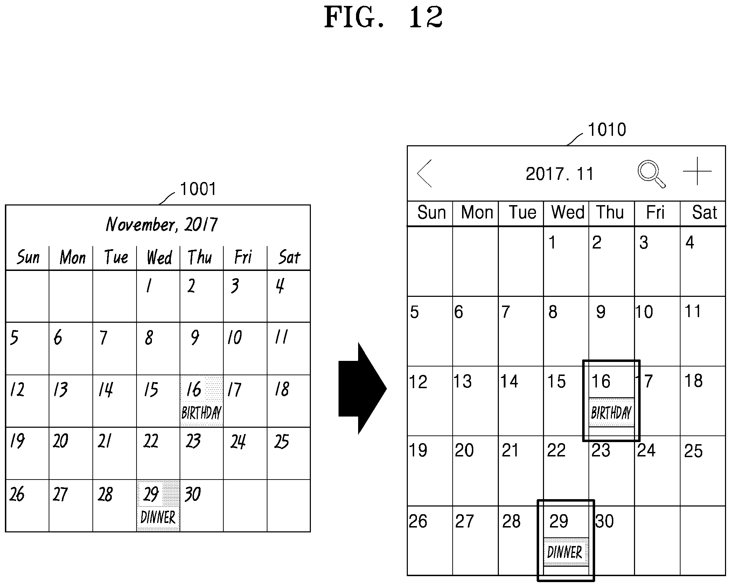

FIG. 12 is a diagram illustrating an example in which an electronic device according to an embodiment updates a recommended application to reflect text information recognized from an image.

The electronic device 100 according to the embodiment may recognize text information from an object and update a recommended application corresponding to the object to add the text information.

For example, referring to FIG. 12, an object 1001 may be a picture on which a November 2017 calendar is drawn, and text information indicating a certain event (e.g., birthday, dinner, etc.) may be written on the November 2017 calendar. The electronic device 100 may recognize the text information from the object 1001 and update the recommended application corresponding to the object 1001 to reflect the recognized text information. According to an embodiment, when a plurality of recommended applications corresponding to the object 1001 are determined, the electronic device 100 may receive an external input of selecting a recommended application to be displayed on the display 230 from among the recommended applications and update the selected recommendation application to reflect the recognized text information. For example, as illustrated in FIG. 12, the electronic device 100 may recognize "birthday" written on November 16 and "dinner" written on November 29 from the object 1001 as text information. Also, the electronic device 100 may determine a K calendar application 1010 as the recommended application corresponding to the object 1001 and may update the K calendar application 1010 by adding the recognized text information ("birthday" and "dinner") to a November 2017 calendar of the K calendar application 1010. Therefore, the electronic device 100 may display, on the display 230, the K calendar application 1010 indicating the November 2017 calendar. In the displayed K calendar application 1010, the electronic device 100 may display "birthday" in a region corresponding to November 16 and may display "dinner" in a region corresponding to November 29.

According to an embodiment, in the object 1001, green highlight may be displayed in the region corresponding to November 16 and red highlight may be displayed in the region corresponding to November 29. In this case, the electronic device 100 may display green highlight and red highlight in the regions corresponding to November 16 and November 29, respectively, in the K calendar application 1010 displayed on the display 230. When the K calendar application 1010 does not provide green highlight and red highlight, the electronic device 100 may display highlights with different colors or may display highlights in different forms, but embodiments are not limited thereto.

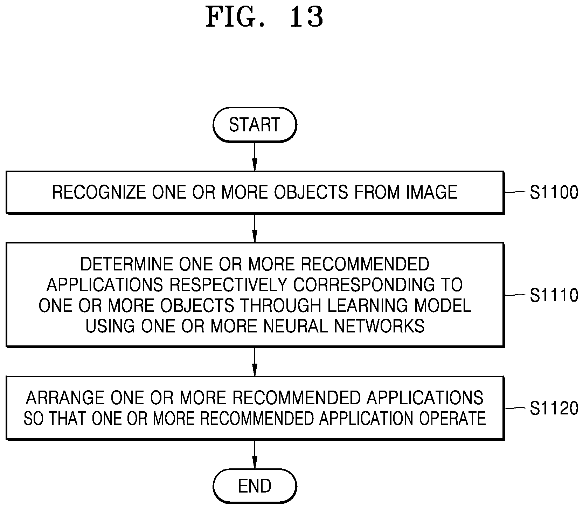

FIG. 13 is a flowchart of a method of operating an electronic device, according to an embodiment.

In operation S1100, the electronic device 100 recognizes one or more objects from an image.

The one or more objects recognized from the image may respectively correspond to applications and may indicate attributes of applications desired by the user. The electronic device 100 according to the embodiment may analyze the image to recognize one or more objects, based on a boundary line for dividing a certain region included in the image, a degree of color change in the image, a shape indicating a certain region included in the image, and the like, but embodiments are not limited thereto.

In operation S1110, the electronic device 100 determines one or more recommended applications respectively corresponding to the one or more objects through a learning model using one or more neural networks.

The electronic device 100 the learning model using one or more neural networks to determine one or more recommended applications respectively corresponding to one or more objects according to their similarity to the one or more objects. Also, the electronic device 100 extracts attributes of recommended applications from objects and determine one or more recommended applications based on the extracted attributes of the recommended applications. The attributes of the recommended applications may include at least one of types, sizes, colors, and shapes of the applications.

Also, the electronic device 100 according to the embodiment selects one or more recommended applications corresponding to the object from an application DB. The application DB may include a list of applications installed on the electronic device 100 and applications stored in an external server. The applications stored in the external server may refer to applications not installed on the electronic device 100a, and the electronic device 100a may receive the applications from the external server and install the received applications. For example, the electronic device 100a may receive applications not installed on the electronic device 100a from the external server through an application store and install the received applications, but embodiments are not limited thereto.

In operation S1120, the electronic device 100 according to the embodiment displays one or more recommended applications on the display 230 so that the one or more recommended applications operate.

The electronic device 100 according to the embodiment may set an arrangement criterion for arranging one or more recommended applications on the display 230 based on the image. For example, the electronic device 100 may determine at least one of the size, location, and transparency of each object from one or more objects recognized from the image. Also, the electronic device 100 may arrange the recommended application corresponding to each object on the display 230 based on at least one of the size, location, and transparency of each object.

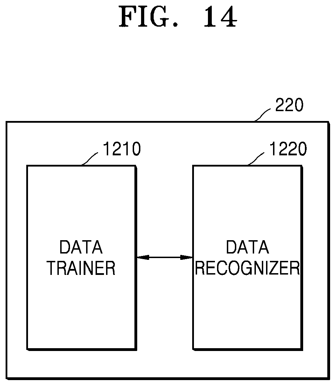

FIG. 14 is a block diagram illustrating a configuration of a processor according to an embodiment.

Referring to FIG. 14, a processor 220 according to an embodiment, which is not part of the present invention, may include a data trainer 1210 and a data recognizer 1220.

The data trainer 1210 may learn a criterion for determining a recommended application corresponding to an object recognized from an image. The data trainer 1210 may learn a criterion regarding what information of the object is used to determine the recommended application corresponding to the object. Also, the data trainer 1210 may learn a criterion regarding a method of determining a recommended application by using information about the object. Also, the data trainer 1210 may learn a criterion for extracting an attribute of a recommended application from an object recognized from an image and may learn a criterion for determining one or more recommended applications corresponding to the object based on the extracted attribute of the recommended application.

The data trainer 1210 may obtain an object to be used for learning and may apply the obtained object to a data recognition model, which is to be described below, so as to learn a criterion for determining the recommended application corresponding to the object.

The data recognizer 1220 may determine one or more recommended applications corresponding to the object and output a result of the determining. The data recognizer 1220 may use the learned data recognition model to determine one or more recommended applications corresponding to the object. The data recognizer 1220 may obtain an object according to a preset criterion obtained by learning and use the data recognition model by using the obtained object as an input value. Also, the data recognizer 1220 may use the data recognition model to determine one or more recommended applications corresponding to the object. Also, a result value output from the data recognition model by using the object as the input value may be used to update the data recognition model.

At least one of the data trainer 1210 and the data recognizer 1220 may be manufactured in the form of at least one hardware chip and mounted on the electronic device. For example, at least one of the data trainer 1210 and the data recognizer 1220 may be manufactured in the form of a dedicated hardware chip for Al or manufactured as part of an existing general-purpose processor (e.g., a central processing unit (CPU) or an application processor) or a graphics dedicated processor (e.g., a graphics processing unit (GPU)) and may be mounted on the above-described various electronic devices.

In this case, the data trainer 1210 and the data recognizer 1220 may be mounted on a single device or may be respectively mounted on separate devices. For example, one of the data trainer 1210 and the data recognizer 1220 may be included in the single electronic device 100, and the other thereof may be included in the server. Also, model information constructed by the data trainer 1210 may be provided to the data recognizer 1220 through wired or wireless communication, and data input to the data recognizer 1220 may be provided to the data trainer 1210 as additional training data.

At least one of the data trainer 1210 and the data recognizer 1220 may be implemented as at least one software module. When at least one of the data trainer 1210 and the recognizer 1220 is implemented as a software module (or a program module including instructions), the software module may be stored in a non-transitory computer-readable medium. Also, in this case, at least one software module may be provided by an operating system (OS) or may be provided by a certain application. Alternatively, part of at least one software module may be provided by an OS, and the remaining part thereof may be provided by a certain application.

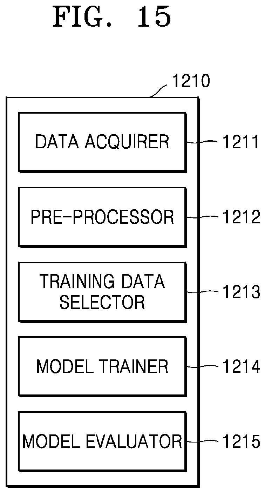

FIG. 15 is a block diagram illustrating a configuration of a data trainer according to an embodiment, which is not part of the present invention.

Referring to FIG. 15, a data trainer 1210 according to an embodiment, which is not part of the present invention. may include a data obtainer 1211, a pre-processor 1212, a training data selector 1213, a model learner 1214, and a model evaluator 1215.

The data obtainer 1211 may obtain data necessary for learning to determine one or more recommended applications corresponding to an object. The data obtainer 1211 may obtain data from an external server, such as a social network server, a cloud server, or a content providing server.

The data obtainer 1211 may obtain an object necessary for learning to determine one or more recommended applications corresponding to an object. For example, the data obtainer 1211 may obtain an object from at least one external device connected to the electronic device 100 through a network and may obtain an image by extracting one or more objects from a picture drawn by a user or a captured photograph.

The pre-processor 1212 may pre-process the obtained data so as to be used for learning to determine one or more recommended applications corresponding to an object. The pre-processor 1212 may process the obtained data in a preset format so that the model learner 1214, which is to be described below, may use the obtained data for learning to determine one or more recommended applications corresponding to an object. For example, the pre-processor 1212 may process the obtained object in a preset format by performing pre-processing including at least one of a cropping operation and a warping operation on the obtained object.

The training data selector 1213 may select data necessary for learning from among pieces of pre-processed data. The selected data may be provided to the model learner 1214. The training data selector 1213 may select data necessary for learning from among pieces of pre-processed data according to a preset criterion for determining one or more recommended applications corresponding to the object. Also, the training data selector 1213 may select data according to a preset criterion by learning performed by the model learner 1214 that is to be described below.

The model learner 1214 may learn a criterion regarding which training data is to be used to determine one or more recommended applications corresponding to the object. For example, the model learner 1214 may learn a criterion for extracting an attribute of a recommended application from an object and may learn at least one of a type, color, size, and shape of the recommended application.

Also, the model learner 1214 may use the training data to train the data recognition model used to determine one or more recommended applications corresponding to the object. In this case, the data recognition model may be a previously constructed model. For example, the data recognition model may be a model that is previously constructed by receiving basic training data (e.g., a sample image, etc.).

The data recognition model may be constructed considering the application field of the recognition model, the purpose of learning, the computer performance of the device, or the like. The data recognition model may be, for example, a model based on a neural network. For example, a model such as a deep neural network (DNN), a recurrent neural network (RNN), or a bidirectional recurrent deep neural network (BRDNN) may be used as the data recognition model, but embodiments are not limited thereto.

According to various embodiments, when there are a plurality of previously constructed recognition models, the model learner 1214 may determine, as a data recognition model to be learned, a data recognition model having a large correlation between input training data and basic training data. In this case, the basic training data may be previously classified for each data type, and the recognition model may be previously constructed for each data type. For example, the basic training data may be previously classified based on various criteria such as a region in which the training data is generated, a time at which the training data is generated, a size of the training data, a genre of the training data, a creator of the training data, and a type of an object in the training data.

Also, the model learner 1214 may learn the data recognition model by using, for example, a learning algorithm including error back-propagation or gradient descent.

Also, the model learner 1214 may learn the data recognition model through, for example, supervised learning using training data as the input value. Also, for example, the model learner 1214 may self-learn the type of data necessary for determining the user's condition without separate supervision, so as to train the data recognition model through unsupervised learning that finds a criterion for determining a user's condition. Also, the model learner 1214 may learn the data recognition model through, for example, reinforcement learning using a feedback about whether a result of determining a user's condition according to training is correct.

Also, when the data recognition model is learned, the model learner 1214 may store the learned data recognition model. In this case, the model learner 1214 may store the learned data recognition model in a memory of a device including the data recognizer 1220. Alternatively, the model learner 1214 may store the learned data recognition model in a memory of a device including the data recognizer 1220, which is to be described below. Alternatively, the model learner 1214 may store the learned data recognition model in a memory of a server connected to the electronic device 100 through a wired or wireless network.

In this case, the memory in which the learned data recognition model is stored may also store, for example, commands or data associated with at least one other element of the device. Also, the memory may store software and/or a program. The program may include, for example, kernel, middleware, application programming interface (API), and/or application programs (or "applications").

When evaluation data is input to the data recognition model and a recognition result output from the evaluation data does not satisfy a certain criterion, the model evaluator 1215 may cause the model learner 1214 to learn again. In this case, the evaluation data may be data preset for evaluating the data recognition model.

For example, when the number or ratio of evaluation data, an analysis result of which is inaccurate among analysis results of the learned data recognition model for the evaluation data, exceeds a preset threshold value, the model evaluator 1215 may evaluate that the certain criterion is not satisfied. For example, in a case in which the certain criterion is defined as a ratio of 2 %, when the learned data recognition model outputs an incorrect recognition result for more than 20 pieces of evaluation data among a total of 1,000 pieces of evaluation data, the model evaluator 1215 may evaluate that the learned data recognition model is unsuitable.

When there are a plurality of learned data recognition models, the model evaluator 1215 may evaluate whether each learned data recognition model satisfies the certain criterion and determine a model satisfying the certain criterion as a final data recognition model. In this case, when there are a plurality of models satisfying the certain criterion, the model evaluator 1215 may determine, as the final data recognition model, any one model or a certain number of models that are preset in the descending order of evaluation scores.

Meanwhile, at least one of the data obtainer 1211, the pre-processor 1212, the training data selector 1213, the model learner 1214, and the model evaluator 1215 in the data trainer 1210 may be manufactured in the form of a hardware chip and mounted on an electronic device. For example, at least one of the data obtainer 1211, the pre-processor 1212, the training data selector 1213, the model learner 1214, and the model evaluator 1215 may be manufactured in the form of a dedicated hardware chip for Al or manufactured as part of an existing general-purpose processor (e.g., a CPU or an application processor) or a graphics dedicated processor (e.g., a GPU) and may be mounted on the above-described various electronic devices.

Also, the data obtainer 1211, the pre-processor 1212, the training data selector 1213, the model learner 1214, and the model evaluator 1215 may be mounted on the single device or may be respectively mounted on separate devices. For example, some of the data obtainer 1211, the pre-processor 1212, the training data selector 1213, the model learner 1214, and the model evaluator 1215 may be included in the electronic device 100, and some of the others may be included in the server.

Also, at least one of the data obtainer 1211, the pre-processor 1212, the training data selector 1213, the model learner 1214, and the model evaluator 1215 may be implemented as a software module. When at least one of the data obtainer 1211, the pre-processor 1212, the training data selector 1213, the model learner 1214, and the model evaluator 1215 is implemented as a software module (or a program module including instructions), the software module may be stored in a non-transitory computer-readable medium. Also, in this case, at least one software module may be provided by an OS or may be provided by a certain application. Alternatively, part of at least one software module may be provided by an OS, and the remaining part thereof may be provided by a certain application.

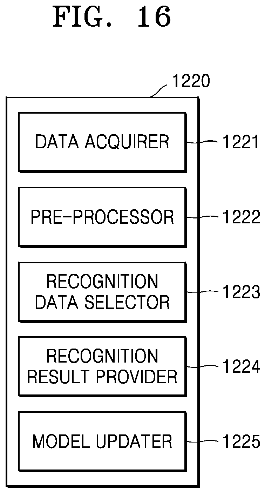

FIG. 16 is a block diagram illustrating a configuration of a data recognizer according to an embodiment.

Referring to FIG. 16, a data recognizer 1220 according to an embodiment, which is not part of the present invention, may include a data obtainer 1221, a pre-processor 1222, a recognition data selector 1223, a recognition result provider 1224, and a model updater 1225.

The data obtainer 1221 may obtain data necessary for determining one or more recommended applications corresponding to an object, and the pre-processor 1222 may pre-process the obtained data so that the obtained data is used to determine one or more recommended applications corresponding to the object. The pre-processor 1222 may process the obtained data in a preset format so that the recognition result provider 1224, which is to be described below, may use the obtained data to determine one or more recommended applications corresponding to the object.

The recognition data selector 1223 may select data necessary for determining one or more recommended applications corresponding to the object from among pieces of the pre-processed data. The selected data may be provided to the recognition result provider 1224. The recognition data selector 1223 may select all or part of the pre-processed data according to a preset criterion for determining one or more recommended applications corresponding to the object.

The recognition result provider 1224 may apply the selected data to the data recognition model to determine one or more recommended applications corresponding to the object. The recognition result provider 1224 may provide a recognition result according to a recognition purpose of data. The recognition result provider 1224 may apply the selected data to the data recognition model by using the data selected by the recognition data selector 1223 as an input value. Also, the analysis result may be determined by the recognition model.

The recognition result provider 1224 may provide identification information indicating the determined one or more recommended applications. For example, the recognition result provider 1224 may provide type, size, and location information about the determined one or more recommended applications.

The model updater 1225 may update the data recognition model based on the evaluation of the recognition result provided by the recognition result provider 1224. For example, the model updater 1225 may provide, to the model learner 1014, the recognition result provided by the recognition result provider 1224, so that the model learner 1014 updates the data recognition model.

At least one of the data obtainer 1221, the pre-processor 1222, the recognition data selector 1223, the recognition result provider 1224, and the model updater 1225 in the data recognizer 1220 may be manufactured in the form of at least one hardware chip and mounted on the electronic device 100. For example, at least one of the data obtainer 1221, the pre-processor 1222, the recognition data selector 1223, the recognition result provider 1224, and the model updater 1225 may be manufactured in the form of a dedicated hardware chip for AI or manufactured as part of an existing general-purpose processor (e.g., a CPU or an application processor) or a graphics dedicated processor (e.g., a GPU) and may be mounted on the above-described various electronic devices.

Also, the data obtainer 1221, the pre-processor 1222, the recognition data selector 1223, the recognition result provider 1224, and the model updater 1225 may be mounted on the single device or may be respectively mounted on separate devices. For example, some of the data obtainer 1221, the pre-processor 1222, the recognition data selector 1223, the recognition result provider 1224, and the model updater 1225 may be included in the electronic device 100, and some of the others may be included in the server.

Also, at least one of the data obtainer 1221, the pre-processor 1222, the recognition data selector 1223, the recognition result provider 1224, and the model updater 1225 may be implemented as a software module. When at least one of the data obtainer 1221, the pre-processor 1222, the recognition data selector 1223, the recognition result provider 1224, and the model updater 1225 is implemented as a software module (or a program module including instructions), the software module may be stored in a non-transitory computer-readable medium. Also, in this case, at least one software module may be provided by an OS or may be provided by a certain application. Alternatively, part of at least one software module may be provided by an OS, and the remaining part thereof may be provided by a certain application.

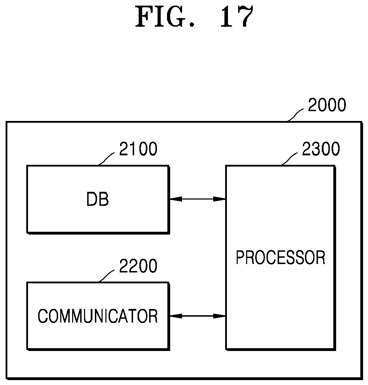

FIG. 17 is a block diagram illustrating a configuration of a server according to an embodiment.

Referring to FIG. 17, a server 2000 according to an embodiment may include a DB 2100, a communicator 2200, and a processor 2300.

The DB 2100 may store one or more objects recognized from an image indicating configurations of applications desired by a user.

The communicator 2200 may include one or more elements for communication with the electronic device 100.

The processor 2300 may control overall operations of the server 2000. For example, the processor 2300 may control overall operations of the DB 2100 and the communicator 2200 by executing programs stored in the DB 2100 of the server 2000. The processor 2300 may execute the programs stored in the DB 2100 to perform some operations of the electronic device 100, which have been described with reference to FIGS. 1 to 15.

The processor 2300 may execute a function of determining one or more recommended applications corresponding to an object, which is a function performed by the electronic device 100 in FIGS. 1 to 16.

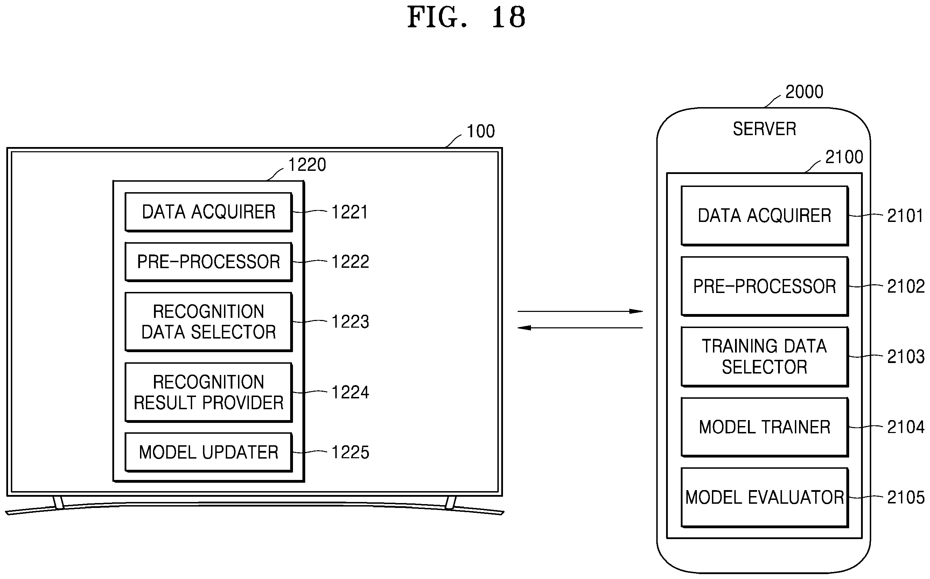

FIG. 18 is a diagram illustrating an example in which an electronic device and a server, according to an embodiment, interwork with each other to train and recognize data.

Referring to FIG. 18, the server 2000 may learn a criterion for determining one or more recommended applications corresponding to an object. The server 2000 may learn the criterion for determining one or more recommended applications corresponding to the object by obtaining data to be used for learning and applying the obtained data to a data recognition model.

In this case, a model learner 2104 of the server 2000 may perform the function of the data trainer 1210 illustrated in FIG. 16. The model learner 2104 of the server 2000 may learn a criterion regarding which training data is to be used to determine one or more recommended applications corresponding to the object. Also, the model learner 2104 of the server 2000 may learn a criterion regarding a method of determining one or more recommended applications corresponding to the object. The model learner 2104 may learn the criterion for determining one or more recommended applications corresponding to the object by obtaining data to be used for learning and applying the obtained data to the data recognition model.

Also, a recognition result provider 1224 of the electronic device 100 may apply data selected by a recognition data selector 1023 to the data recognition model generated by the server 2000 to determine one or more recommended applications corresponding to the object. For example, the recognition result provider 1224 may transmit the data selected by the recognition data selector 1223 to the server 2000, and the server 2000 may make a request for determining one or more recommended applications corresponding to the object by applying the data selected by the recognition data selector 1223 to the recognition model.

Alternatively, the recognition result provider 1224 of the electronic device 100 may receive, from the server 2000, the recognition model generated by the server 2000 and may use the received recognition model to determine one or more recommended applications corresponding to the object. In this case, the recognition result provider 1224 of the electronic device 100 may apply data selected by the recognition data selector 1223 to the data recognition model received from the server 2000 to determine one or more recommended applications corresponding to the object.

Also, the electronic device 100 and the server 2000 may effectively distribute and perform operations for training and data recognition of the data recognition model. In this manner, data processing may be efficiently performed so as to provide a service matching a user's intention and a user's privacy may be effectively protected.

Some embodiments may be implemented in the form of a recording medium including computer-executable instructions, such as a computer-executable program module. A computer-readable medium may be any available medium that is accessible by a computer and may include any volatile and non-volatile media and any removable and non-removable media. Also, the computer-readable recording medium may include any computer storage medium and communication medium. The computer storage medium may include any volatile and non-volatile medium and any removable and non-removable medium implemented by any method or technology for storing information such as computer-readable instructions, data structures, program modules, or other data. The communication medium may include computer-readable instructions, data structures, program modules, other data of modulated data signals such as carriers, or other transmission mechanisms, and may include any information transmission medium.

Also, the term "-or/-er" used herein may be a hardware component such as a processor or a circuit, and/or a software component executed by a hardware component such as a processor.

The foregoing description of the present disclosure is for illustration and those of ordinary skill in the art will appreciate that modifications may be easily made to other specific forms without changing the essential features of the present disclosure. Therefore, it will be understood that the embodiments described above are illustrative in all aspects and not restrictive. For example, each element described as a single type may be implemented in a distributed manner. Similarly, elements described as distributed may be implemented in a combined form.

The scope of the present disclosure is determined by the appended claims rather than the above detailed description.

## Claims

1. An electronic device comprising:
a display (230);
a memory (210) configured to store one or more instructions; and
a processor (220) configured to execute the one or more instructions stored in the memory to:
obtain an image which represents a layout (101) of applications desired by a user;
recognize objects (511, 512, 513) from the image, each object corresponding to each application and representing attributes of the application, the attributes of the application comprising a type for the application;
determine one or more recommended applications (621, 622, 631, 632, 641, 642) respectively corresponding to the objects according to similarity of attributes of the recommended applications, including a type of an application, to the attributes represented by the objects through a learning model (610) using one or more neural networks, wherein the processor selects the one or more recommended applications from an application database (2100) wherein the learning model receives the objects included in the image, identifies a type of an application corresponding to the received objects, and outputs the one or more recommended applications based on the identified type of the application; and
display the determined one or more recommended applications on the display.

2. The electronic device of claim 1, wherein the processor is further configured to execute the one or more instructions to.
in response to an external input of selecting one or more applications from the plurality of recommended applications, display the selected one or more applications on the display so that the selected one or more applications operate.

3. The electronic device of claim 1, wherein the processor is further configured to the one or more instructions to.
set an arrangement criterion for arranging the one or more recommended applications on the display based on the image; and
arrange the one or more recommended applications on the display based on the set arrangement criterion.

4. The electronic device of claim 1, wherein the learning model is determined by learning a method of extracting attributes of recommended applications from the objects in response to an input of the objects to the one or more neural networks and determining the one or more recommended applications based on the extracted attributes of the recommended applications.

5. The electronic device of claim 4, wherein the attributes of the recommended applications further comprise at least one of a size, a color, and a shape of an application.

6. The electronic device of claim 1, wherein the processor is further configured to execute the one or more instructions to perform pre-processing for inputting the recognized objects included in the image into the learning model, and
the pre-processing comprises cropping operation which crops the objects in the image, by using at least one of operation of analyzing color change in the image, an operation of detecting a boundary line included in the image, or an operation of extracting a shape of region included in the image.

7. The electronic device of claim 1, wherein the image comprises an image generated by receiving an external input for drawing configurations of applications desired by a user or a photograph obtained by capturing an image including the configurations of the applications desired by the user.

8. The electronic device of claim 1, wherein the application database comprises a list of applications installed on the electronic device and applications stored in an external server.

9. The electronic device of claim 8, wherein the processor is further configured to execute the one or more instructions to
when the selected one or more recommended applications are determined as applications not installed on the electronic device, receive the selected one or more recommended applications from the external server and install the received selected one or more recommended applications; and
display the installed one or more recommended applications on the display so that the installed one or more recommended applications operate.

10. The electronic device of claim 1, wherein the processor is further configured to execute the one or more instructions to:
recognize text information from the objects;
update the one or more recommended applications respectively corresponding to the objects to reflect the text information; and
display the updated one or more recommended applications on the display.

11. A method of operating an electronic device, the method comprising:
obtaining an image which represents a layout (101) of applications desired by a user; recognizing objects (511, 512, 513) from the image, each object corresponding to each application and representing attributes of the application, the attributes of the application comprising a type for the application;
determining one or more recommended applications (621, 622, 631, 632, 641, 642) respectively corresponding to the objects according to similarity of attributes of the recommended applications, including a type of an application, to the attributes represented by the objects through a learning model (610) using one or more neural networks, the one or more recommended applications selected from an application database, (2100) wherein the learning model receives the objects included in the image, identifies a type of an application corresponding to the received objects, and outputs the one or more recommended applications based on the identified type of the application; and
displaying the determined one or more recommended applications on a display of the electronic device

12. The method of claim 11, wherein
the displaying comprises, in response to an external input of selecting one or more applications from the plurality of recommended applications, displaying the selected one or more applications on the display.

13. The method of claim 11, wherein the displaying comprises:
setting an arrangement criterion for arranging the one or more recommended applications on a display of the electronic device based on the image; and
arranging the one or more recommended applications on the display of the electronic device based on the set arrangement criterion.

14. The method of claim 11, wherein the learning model is configured to extract attributes of recommended applications from the objects in response to an input of the objects to the one or more neural networks, and
the learning model is determined by learning a method of determining the one or more recommended applications based on the extracted attributes of the recommended application.

15. A computer-readable recording medium having recorded thereon a program for implementing the method of claim 11.

## Patentansprüche

1. Elektronische Vorrichtung, die Folgendes umfasst:
eine Anzeige (230);
einen Speicher (210), der zum Speichern einer oder mehrerer Anweisungen konfiguriert ist; und
einen Prozessor (220),
der zum Ausführen der einen oder mehreren im Speicher gespeicherten Anweisungen konfiguriert ist, um:
ein Bild zu erhalten, das ein Layout (101) von Anwendungen repräsentiert, die von einem Benutzer gewünscht werden;
Objekte (511, 512, 513) aus dem Bild zu erkennen,
wobei jedes Objekt jeder Anwendung entspricht und
Attribute der Anwendung repräsentiert, wobei die Attribute der Anwendung einen Typ für die Anwendung umfassen;
eine oder mehrere empfohlene Anwendungen (621, 622, 631, 632, 641, 642) zu bestimmen, die jeweils den Objekten entsprechend der Ähnlichkeit der Attribute der empfohlenen Anwendungen entsprechen, einschließlich eines Typs einer Anwendung, mit den durch die Objekte repräsentierten Attributen durch ein Lernmodell (610) unter Verwendung
eines oder mehrerer neuronaler Netze, wobei der Prozessor die eine oder mehrere empfohlene Anwendungen aus einer Anwendungsdatenbank (2100) auswählt,
wobei das Lernmodell die in dem Bild eingeschlossenen Objekte empfängt,
einen Typ einer Anwendung identifiziert, der den empfangenen Objekten entspricht, und die eine oder mehrere empfohlene Anwendungen basierend auf dem identifizierten Typ der Anwendung ausgibt; und
die bestimmte(n) eine oder mehreren empfohlene(n) Anwendung(en) auf der Anzeige anzeigt.

2. Elektronische Vorrichtung nach Anspruch 1, wobei der Prozessor ferner konfiguriert ist, um die eine oder mehrere Anweisungen auszuführen,
um als Reaktion auf eine externe Eingabe des Auswählens einer oder mehrerer Anwendungen aus der Vielzahl der empfohlenen Anwendungen die ausgewählte(n) eine oder mehreren Anwendung(en) auf der Anzeige anzuzeigen, sodass die ausgewählte(n) eine oder mehreren Anwendung(en) betrieben werden.

3. Elektronische Vorrichtung nach Anspruch 1, wobei der Prozessor ferner konfiguriert ist, um die eine oder mehrere Anweisungen auszuführen,
um ein Anordnungskriterium zum Anordnen der einen oder mehrerer empfohlener Anwendungen auf der Anzeige basierend auf dem Bild festzulegen; und
die eine oder mehrere empfohlene Anwendungen auf der Anzeige basierend auf dem festgelegten Anordnungskriterium anzuordnen.

4. Elektronische Vorrichtung nach Anspruch 1, wobei das Lernmodell durch Lernen eines Verfahrens zum Extrahieren von Attributen empfohlener Anwendungen aus den Objekten als Reaktion auf eine Eingabe der Objekte in das eine oder mehrere neuronale Netze und zum Bestimmen der einen oder mehrerer empfohlener Anwendungen basierend auf den extrahierten Attributen der empfohlenen Anwendungen bestimmt wird.

5. Elektronische Vorrichtung nach Anspruch 4, wobei die Attribute der empfohlenen Anwendungen ferner mindestens eines von einer Größe, einer Farbe und einer Form einer Anwendung umfassen.

6. Elektronische Vorrichtung nach Anspruch 1, wobei der Prozessor ferner konfiguriert ist, um die eine oder mehrere Anweisungen auszuführen, um eine Vorverarbeitung zum Eingeben der erkannten Objekte, die in dem Bild eingeschlossen sind, in das Lernmodell durchzuführen, und
die Vorverarbeitung einen Zuschneidevorgang umfasst, der die Objekte in dem Bild zuschneidet, unter Verwendung zumindest eines Vorgangs des Analysierens einer Farbänderung in dem Bild, eines Vorgangs des Erkennens einer in dem Bild enthaltenen Begrenzungslinie oder eines Vorgangs des Extrahierens einer Form eines in dem Bild eingeschlossenen Bereichs.

7. Elektronische Vorrichtung nach Anspruch 1, wobei das Bild ein Bild umfasst, das durch Empfangen einer externen Eingabe zum Zeichnen von Konfigurationen von Anwendungen, die von einem Benutzer gewünscht werden, erzeugt wird, oder ein Foto, das durch Aufnehmen eines Bildes erhalten wird, das die Konfigurationen von Anwendungen, die von dem Benutzer gewünscht werden, einschließt.

8. Elektronische Vorrichtung nach Anspruch 1, wobei die Anwendungsdatenbank eine Liste von auf der elektronischen Vorrichtung installierten Anwendungen und von auf einem externen Server gespeicherten Anwendungen umfasst.

9. Elektronische Vorrichtung nach Anspruch 8, wobei der Prozessor ferner konfiguriert ist, um die eine oder mehrere Anweisungen auszuführen, um:
wenn die ausgewählte(n) eine oder mehreren empfohlene(n) Anwendung(en) als nicht auf der elektronischen Vorrichtung installierte Anwendungen bestimmt werden, die ausgewählte(n) eine oder mehreren empfohlene(n) Anwendung(en) von dem externen Server zu empfangen und die empfangene(n), ausgewählte(n) eine oder mehreren empfohlene(n) Anwendung(en) zu installieren; und
die installierte(n) eine oder mehreren empfohlene(n) Anwendung(en) auf der Anzeige anzuzeigen, sodass die installierte(n) eine oder mehreren empfohlene(n) Anwendung(en) betrieben werden.

10. Elektronische Vorrichtung nach Anspruch 1, wobei der Prozessor ferner konfiguriert ist, um die eine oder mehrere Anweisungen auszuführen, um:
Textinformationen von den Objekten zu erkennen;
die eine oder mehrere empfohlene Anwendungen, die jeweils den Objekten entsprechen, zu aktualisieren, um die Textinformationen widerzuspiegeln; und
die aktualisierte(n) eine oder mehreren empfohlene(n) Anwendung(en) auf der Anzeige anzuzeigen.

11. Verfahren zum Betreiben einer elektronischen Vorrichtung, wobei das Verfahren Folgendes umfasst:
Erhalten eines Bildes, das ein Layout (101) von Anwendungen, die von einem Benutzer gewünscht werden, repräsentiert;
Erkennen von Objekten (511, 512, 513) aus dem Bild,
wobei jedes Objekt jeder Anwendung entspricht und
Attribute der Anwendung repräsentiert, wobei die Attribute der Anwendung einen Typ für die Anwendung umfassen;
Bestimmen einer oder mehrerer empfohlener Anwendungen (621, 622, 631, 632, 641, 642), die jeweils den Objekten entsprechend der Ähnlichkeit der Attribute der empfohlenen Anwendungen entsprechen, einschließlich eines Typs einer Anwendung, mit den durch die Objekte repräsentierten Attributen durch ein Lernmodell (610) unter Verwendung
eines oder mehrerer neuronaler Netze, wobei der Prozessor die eine oder mehrere empfohlene Anwendungen aus einer Anwendungsdatenbank (2100) auswählt,
wobei das Lernmodell die in dem Bild eingeschlossenen Objekte empfängt, einen Typ einer Anwendung identifiziert, der den empfangenen Objekten entspricht, und die eine oder mehrere empfohlene Anwendungen basierend auf dem identifizierten Typ der Anwendung ausgibt; und
Anzeigen der bestimmten einen oder mehreren empfohlenen Anwendungen auf einer Anzeige der elektronischen Vorrichtung.

12. Verfahren nach Anspruch 11,
wobei das Anzeigen als Reaktion auf eine externe Eingabe des Auswählens einer oder mehrerer Anwendungen aus der Vielzahl der empfohlenen Anwendungen das Anzeigen der ausgewählten einen oder mehreren Anwendungen auf der Anzeige umfasst.

13. Verfahren nach Anspruch 11, wobei das Anzeigen Folgendes umfasst:
Festlegen eines Anordnungskriteriums zum Anordnen der einen oder mehrerer empfohlener Anwendungen auf einer Anzeige der elektronischen Vorrichtung basierend auf dem Bild; und
Anordnen der einen oder mehrerer empfohlener Anwendungen auf der Anzeige der elektronischen Vorrichtung basierend auf dem festgelegten Anordnungskriterium.

14. Verfahren nach Anspruch 11, wobei das Lernmodell konfiguriert ist, um Attribute empfohlener Anwendungen aus den Objekten als Reaktion auf eine Eingabe der Objekte in das eine oder mehrere neuronale Netze zu extrahieren, und
das Lernmodell durch Lernen eines Verfahrens zum Bestimmen der einen oder mehrerer empfohlener Anwendungen basierend auf den extrahierten Attributen der empfohlenen Anwendung bestimmt wird.

15. Computerlesbares Aufzeichnungsmedium, das darauf ein Programm zum Implementieren des Verfahrens nach Anspruch 11 aufgezeichnet hat.

## Revendications

1. Dispositif électronique comprenant :
un écran (230) ;
une mémoire (210) configurée pour stocker une ou plusieurs instructions ; et
un processeur (220) configuré pour exécuter les une ou plusieurs instructions stockées dans la mémoire pour :
obtenir une image qui représente une disposition (101) d'applications souhaitées par un utilisateur ;
reconnaître des objets (511, 512, 513) à partir de l'image, chaque objet correspondant à chaque application et
représenter des attributs de l'application, les attributs de l'application comprenant un type pour l'application ;
déterminer une ou plusieurs applications recommandées (621, 622, 631, 632, 641, 642) correspondant respectivement aux objets selon la similarité d'attributs des applications recommandées, y compris un type d'application, aux attributs représentés par les objets à travers un modèle d'apprentissage (610) utilisant un ou plusieurs réseaux neuronaux, dans lequel le processeur sélectionne les une ou plusieurs applications recommandées à partir d'une base de données d'applications (2100)
dans lequel le modèle d'apprentissage reçoit les objets inclus dans l'image, identifie un type d'application correspondant aux objets reçus, et sort les une ou plusieurs applications recommandées sur la base du type identifié de l'application ; et
afficher les une ou plusieurs applications recommandées déterminées sur l'écran.

2. Dispositif électronique selon la revendication 1, dans lequel le processeur est en outre configuré pour exécuter les une ou plusieurs instructions pour :
en réponse à une entrée externe de sélection d'une ou de plusieurs applications parmi la pluralité d'applications recommandées, afficher les une ou plusieurs applications sélectionnées sur l'écran de sorte que les une ou plusieurs applications sélectionnées fonctionnent.

3. Dispositif électronique selon la revendication 1, dans lequel le processeur est en outre configuré pour exécuter les une ou plusieurs instructions pour :
définir un critère d'agencement pour agencer les une ou plusieurs applications recommandées sur l'écran sur la base de l'image ; et
agencer les une ou plusieurs applications recommandées sur l'écran sur la base du critère d'agencement défini.

4. Dispositif électronique selon la revendication 1, dans lequel le modèle d'apprentissage est déterminé en apprenant un procédé d'extraction d'attributs d'applications recommandées à partir des objets en réponse à une entrée des objets dans les un ou plusieurs réseaux neuronaux et de détermination des une ou plusieurs applications recommandées sur la base des attributs extraits des applications recommandées.

5. Dispositif électronique selon la revendication 4, dans lequel les attributs des applications recommandées comprennent en outre au moins l'une parmi une taille, une couleur et une forme d'application.

6. Dispositif électronique selon la revendication 1, dans lequel le processeur est en outre configuré pour exécuter les une ou plusieurs instructions pour effectuer un prétraitement pour entrer les objets reconnus inclus dans l'image dans le modèle d'apprentissage, et
le prétraitement comprend une opération de recadrage qui recadre les objets dans l'image, en utilisant au moins l'une parmi une opération d'analyse de changement de couleur dans l'image, une opération de détection d'une ligne limite incluse dans l'image, ou une opération d'extraction d'une forme de région incluse dans l'image.

7. Dispositif électronique selon la revendication 1, dans lequel l'image comprend une image générée par la réception d'une entrée externe pour dessiner des configurations d'applications souhaitées par un utilisateur ou une photographie obtenue en capturant une image comportant les configurations des applications souhaitées par l'utilisateur.

8. Dispositif électronique selon la revendication 1, dans lequel la base de données d'applications comprend une liste d'applications installées sur le dispositif électronique et d'applications stockées dans un serveur externe.

9. Dispositif électronique selon la revendication 8, dans lequel le processeur est en outre configuré pour exécuter les une ou plusieurs instructions pour :
lorsque les une ou plusieurs applications recommandées sélectionnées sont déterminées comme des applications non installées sur le dispositif électronique, recevoir les une ou plusieurs applications recommandées sélectionnées à partir du serveur externe et installer les une ou plusieurs applications recommandées sélectionnées reçues ; et
afficher les une ou plusieurs applications recommandées installées sur l'écran de sorte que les une ou plusieurs applications recommandées installées fonctionnent.

10. Dispositif électronique selon la revendication 1, dans lequel le processeur est en outre configuré pour exécuter les une ou plusieurs instructions pour :
reconnaître les informations textuelles des objets ;
mettre à jour les une ou plusieurs applications recommandées correspondant respectivement aux objets pour refléter les informations textuelles ; et
afficher les une ou plusieurs applications recommandées mises à jour sur l'écran.

11. Procédé de fonctionnement d'un dispositif électronique, le procédé comprenant :
l'obtention d'une image qui représente une disposition (101) d'applications souhaitées par un utilisateur ;
la reconnaissance d'objets (511, 512, 513) à partir de l'image, chaque objet correspondant à chaque application et représentant des attributs de l'application, les attributs de l'application comprenant un type pour l'application ;
la détermination d'une ou de plusieurs applications recommandées (621, 622, 631, 632, 641, 642) correspondant respectivement aux objets selon la similarité d'attributs des applications recommandées, y compris un type d'application, aux attributs représentés par les objets à travers un modèle d'apprentissage (610) utilisant un ou plusieurs réseaux neuronaux, les une ou plusieurs applications recommandées étant sélectionnées à partir d'une base de données d'applications, (2100) dans lequel le modèle d'apprentissage reçoit les objets inclus dans l'image, identifie un type d'une application correspondant aux objets reçus, et sort les une ou plusieurs applications recommandées sur la base du type identifié de l'application ; et
l'affichage des une ou plusieurs applications recommandées déterminées sur un écran du dispositif électronique.

12. Procédé selon la revendication 11, dans lequel
l'affichage comprend, en réponse à une entrée externe de sélection d'une ou de plusieurs applications parmi la pluralité d'applications recommandées, l'affichage des une ou plusieurs applications sélectionnées sur l'écran.

13. Procédé selon la revendication 11, dans lequel l'affichage comprend :
la définition d'un critère d'agencement pour agencer les une ou plusieurs applications recommandées sur un écran du dispositif électronique sur la base de l'image ; et
l'agencement des une ou plusieurs applications recommandées sur l'écran du dispositif électronique sur la base du critère d'agencement défini.

14. Procédé selon la revendication 11, dans lequel le modèle d'apprentissage est configuré pour extraire des attributs d'applications recommandées à partir des objets en réponse à une entrée des objets dans les un ou plusieurs réseaux neuronaux, et
le modèle d'apprentissage est déterminé par apprentissage d'un procédé de détermination des une ou plusieurs applications recommandées sur la base des attributs extraits de l'application recommandée.

15. Support d'enregistrement lisible par ordinateur sur lequel est enregistré un programme pour mettre en œuvre le procédé selon la revendication 11.
